# EUROPÄISCHE PATENTSCHRIFT

(11) **EP 2 715 173 B1**
(45) Veröffentlichungstag und Bekanntmachung des Hinweises auf die Patenterteilung: **07.11.2018**
(21) Anmeldenummer: 12723826.9
(22) Anmeldetag: 12.04.2012
(51) Int. Cl.: F16D 11/14

(54) **KUPPLUNG FÜR EIN GETRIEBE**
COUPLING FOR A GEAR MECHANISM
DISPOSITIF D'ACCOUPLEMENT POUR UNE TRANSMISSION

(30) Priorität: 25.05.2011 DE 102011103104
(43) Veröffentlichungstag der Anmeldung: 09.04.2014
(73) Patentinhaber: Sew-Eurodrive GmbH & Co. KG, 76646 Bruchsal (DE)
(72) Erfinder: BÜHN, Oliver, 76703 Kraichtal (DE); FILLINGER, Nadine, 68753 Waghäusel (DE)
(86) Internationale Anmeldenummer: PCT/EP2012/001583
(87) Internationale Veröffentlichungsnummer: WO 2012/159692

(56) Entgegenhaltungen:
- WO-A1-2011/124324
- DE-A1-102009 038 292
- US-A- 3 396 826
- US-A- 4 789 366
- US-A- 4 945 780
- US-A1- 2009 014 272
- US-B1- 6 401 560
- US-B1- 6 817 461

## Beschreibung

Die Erfindung betrifft eine Kupplung für ein Getriebe, sowie eine Elektrohängebahn mit einem Getriebe mit einer solchen Kupplung.
Aus der DE 195 00 503 A1 ist ein Transportsystem mit elektrischen Fördereinheiten bekannt, deren angetriebene Laufkatze aus einem Rumpf, einem ungebremsten Motor, einem Treibrad, kleinen Leitrollen und einem Stromabnehmer besteht. Bei Unterbrechung der Stromversorgung des Motors ist jede Fördereinheit frei verschiebbar. Aus der US 6,401,560 B1 ist eine Kupplung mit Schaltnocken mit zwei Schaltflächen bekannt. Der Erfindung liegt die Aufgabe zugrunde, eine Kupplung für ein Getriebe weiterzubilden, wobei die Kupplung sicher schaltet, einfach zu betätigen ist und kompakt baut.

Erfindungsgemäß wird die Aufgabe bei der Kupplung nach den in Anspruch 1 angegebenen Merkmalen gelöst.
Merkmale der Erfindung bei der Kupplung für das Getriebe sind, dass die Kupplung einen Schaltnocken, ein Schaltelement und ein Federelement aufweist, wobei das Schaltelement durch Drehen des Schaltnockens um die Drehachse des Schaltnockens zwischen mindestens zwei Schaltpositionen gegen oder mit einer auf das Schaltelement wirkenden Federkraft des Federelementes hin und her bewegbar ist, wobei der Schaltnocken zwei Schaltflächen aufweist, und die Schaltflächen mit dem Schaltelement derart zusammenwirken, dass der Betrag der auf das Schaltelement wirkenden Federkraft in Abhängigkeit vom Drehwinkel des Drehens in jeder Schaltposition ein lokales Minimum annimmt. Von Vorteil dabei ist, dass die Schaltpositionen sicher gehalten werden, die Kupplung einfach zu betätigen ist und auch in kompakte Getriebe einbaubar ist.
**Weitere Merkmale der Erfindung sind, dass der Schaltnocken zwei Anschlagflächen aufweist, die mit einer Innenfläche, insbesondere mit einem Innenflächenabschnitt, eines Gehäuseteils derart zusammenwirken, dass die Drehbewegung des Schaltnockens begrenzt ist. Vorteiligerweise ist somit die Drehbewegung begrenzt auf eine Hin- und Herbewegung des Schaltnockens zwischen den zwei durch die Anschlagflächen definierten Winkelwerten. Ein Überdrehen des Schaltnockens und undefinierte Zustände, also beliebige Winkelwerte ist vermeidbar.**

Bei einer vorteilhaften Ausgestaltung wirkt der Schaltnocken mit dem Schaltelement derart zusammen, dass beim Drehen des Schaltnockens auf das Schaltelement zwischen den mindestens zwei Schaltpositionen bei mindestens einer Drehposition des Schaltnockens eine maximale Federkraft wirkt, welche größer ist als die lokalen Minima der Federkraft der Schaltpositionen. Von Vorteil dabei ist, dass die Kupplung nicht selbsttätig schaltet und somit die Sicherheit erhöht ist.

Bei einer vorteilhaften Ausgestaltung korrespondieren die zwei Schaltflächen zu einer Fläche des Schaltelements, wobei in einem der mindestens zwei Schaltzustände die entsprechende Schaltfläche gegen die Fläche drückt. Von Vorteil dabei ist, dass die Kupplung kompakt ist und die Schaltpositionen gehalten werden.

Bei einer vorteilhaften Ausgestaltung ist in einem zweiten der mindestens zwei Schaltzustände die zugehörige Schaltfläche parallel bis annähernd parallel von der Fläche beabstandet. Von Vorteil dabei ist, dass insbesondere im eingekuppelten Zustand die Kupplung reibungsfrei oder zumindest reibungsarm ist.

**Bei einer vorteilhaften Ausgestaltung sind die Anschlagflächen in einem Scheibensegment angeordnet, dessen größter Außenradius größer ist als der Radialabstand von der Innenfläche des Gehäuseteils zur Achse des Schaltnockens. Von Vorteil dabei ist, dass der Schaltnocken einfach fertigbar ist, indem ein Wellenabschnitt eine erhöhten Durchmesser aufweist und dort die Anschlagflächen einarbeitbar sind.**

**Bei einer vorteilhaften Ausgestaltung ist der Radialabstand der Anschlagflächen zur Achse des Schaltnockens kleiner als der Abstand zwischen Innenfläche des Gehäuseteils und Achse des Schaltnockens, insbesondere wobei die Innenfläche parallel zur Achse des Schaltnockens verläuft. Von Vorteil dabei ist, dass die Drehbewegung in einfacher Weise begrenzt ist.**
**Bei einer vorteilhaften Ausgestaltung sind die Radialabstände der Anschlagflächen 201 und 202 zur Achse des Schaltnockens gleich. Von Vorteil dabei ist, dass eine gleichartig stabile Lage in den beiden Schaltzuständen, also Winkelpositionen, erreichbar ist.**
**Bei einer vorteilhaften Ausgestaltung sind die Radialabstände der Schaltflächen 20 kleiner als die Radialabstände der Anschlagflächen 201 und 202. Von Vorteil dabei ist, dass mittels der Anschlagflächen die Drehbewegung begrenzbar ist und mittels der Schaltflächen der axiale Hub zum Schalten erzeugbar ist.**
**Bei einer vorteilhaften Ausgestaltung ist der Radialabstand der beiden Schaltflächen 20 unterschiedlich. Von Vorteil dabei ist, dass der axiale Hub vorgebbar ist.**

Erfindungsgemäß **weisen die Schaltflächen 20 zueinander einen Winkel auf, der demjenigen Winkel gleicht, welchen die beiden Anschlagflächen 201 und 202 zueinander** aufweisen, oder **ist die erste Schaltfläche 20 parallel zur Anschlagfläche 201 angeordnet und die zweite Schaltfläche 20 parallel zur Anschlagfläche 202 angeordnet. Von Vorteil dabei ist, dass die beiden Schaltpositionen als stabile statische Lage ausführbar sind.**
Bei einer vorteilhaften Ausgestaltung sind die zwei Schaltflächen an einem Endbereich des Schaltnockens angeordnet. Von Vorteil dabei ist, dass die Kupplung einfach zu montieren ist.
Bei einer vorteilhaften Ausgestaltung ist der Schaltnocken im Wesentlichen zylinderförmig. Von Vorteil dabei ist, dass die Kupplung sehr kompakt ist.
Bei einer vorteilhaften Ausgestaltung sind die Schaltflächen eben und/oder parallel zur Drehachse angeordnet. Von Vorteil dabei ist, dass die Kupplung einfach zu fertigen ist.
Bei einer vorteilhaften Ausgestaltung sind die Schaltflächen zueinander in einem Winkel angeordnet, vorzugsweise im Wesentlichen senkrecht zueinander angeordnet. Von Vorteil dabei ist, dass eine wohldefinierte, einfache Bewegung zum Schalten der Kupplung genügt. Bei einer vorteilhaften Ausgestaltung bildet der Endbereich einen Zylinderabschnitt, aus welchem zwei Scheibensegmente zur Bildung der Schaltflächen an einem freien Ende des Endbereiches ausgenommen sind. Von Vorteil dabei ist, dass die Kupplung kompakt ist und einfach zu fertigen ist.

Bei einer vorteilhaften Ausgestaltung schließt sich an den Endbereich ein Durchführungsbereich des Schaltnockens an, welcher eine zur Drehachse radial umlaufende Nut zur Aufnahme eines Dichtungselementes, insbesondere eines O-Ringes, aufweist. Von Vorteil dabei ist, dass das Gehäuse gut abgedichtet ist und die Kupplung einfach zu montieren und kompakt ist.

Bei einer vorteilhaften Ausgestaltung weist der dem Endbereich gegenüberliegende Endabschnitt des Schaltnockens eine Befestigungseinrichtung für einen Betätigungshebel auf. Von Vorteil dabei ist, dass die Kupplung kompakt baut und einfach zu schalten ist.

Bei einer vorteilhaften Ausgestaltung ist das Schaltelement durch das Drehen des Schaltnockens in einer Richtung senkrecht zur Drehachse des Schaltnockens zwischen einer Einkuppelposition und einer Auskuppelpostion hin und her bewegbar. Von Vorteil dabei ist, dass die Kupplung kompakt baut und einfach zu montieren ist.

Bei einer vorteilhaften Ausgestaltung ist das Schaltelement drehfest und axial verschiebbar mit einer Welle des Getriebes verbindbar. Von Vorteil dabei ist, dass die Kupplung sicher schaltet, da das Schaltelement sicher geführt ist.

Bei einer vorteilhaften Ausgestaltung ist das Schaltelement mit einem Zahnrad des Getriebes, vorzugsweise formschlüssig, drehfest verbindbar und wieder lösbar. Von Vorteil dabei ist, dass die Kupplung einfach und sicher in ein Getriebe einbaubar ist.

Merkmale des Getriebes mit einer oben beschriebenen Kupplung sind, dass der Schaltnocken, insbesondere mit seinem Durchführungsabschnitt, in einer Gehäusewand eines Gehäuses des Getriebes gehalten ist, wobei die Schaltflächen und das Schaltelement in einem Innenraum des Gehäuses angeordnet sind. Von Vorteil dabei ist, dass die Kupplung einfach in das Getriebe integrierbar ist und sicher schaltet.

Bei einer vorteilhaften Ausgestaltung des Getriebes ist das Schaltelement auf einer Welle, insbesondere Abtriebswelle, des Getriebes drehfest und axial verschiebbar angeordnet, wobei die Federkraft das Schaltelement in Richtung eines Zahnrades, welches drehbar auf der Welle angeordnet ist, drückt, wobei das Schaltelement im eingekuppelten Zustand drehfest mit dem Zahnrad verbunden ist, insbesondere Klauen des Schaltelementes und dazu korrespondierende Klauen in einer Stirnfläche des Zahnrades gegenseitig ineinandergreifen. Von Vorteil dabei ist, dass die Kupplung einfach und sicher schaltbar ist.

Bei einer vorteilhaften Ausgestaltung des Getriebes ist am Schaltnocken außerhalb des Getriebegehäuses ein Schalthebel angeordnet, mit welchem der Schaltnocken gedreht wird, insbesondere wobei eine Kraftkomponente vom Schaltnocken auf das Schaltelement, welche durch die Gewichtskraft des Schalthebels hervorgerufen ist, in jeder Lage des Getriebes kleiner ist, als die Federkraft auf das Schaltelement. Von Vorteil dabei ist, dass die Kupplung einfach zu betätigen ist und sicher in der geschaltete Schaltposition verbleibt.

Merkmale einer Laufkatze für eine Elektrohängebahn mit einem oben beschriebenen Getriebe sind, dass das Getriebe von einem Motor der Laufkatze angetrieben ist und ein Laufrad der Laufkatze mit der Welle des Getriebes drehfest verbunden ist. Von Vorteil dabei ist, dass das Getriebe einfach per Hand zu betätigen ist.

Merkmale einer Elektrohängebahn sind, dass eine oben beschriebene Laufkatze verwendet wird. Von Vorteil ist dabei, dass die Elektrohängebahn sicher betreibbar ist. Als weiterer Vorteil ergibt sich, dass eine Fördereinheit der Elektrohängebahn mit einer Laufkatze, welche eine oben beschriebenes Getriebe mit einer erfindungsgemäßen Kupplung aufweist bei einem Stromausfall sicher in der Position verbleibt und erst durch Betätigen der Kupplung frei verschiebbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand eines Ausführungsbeispiels mit Bezugnahme auf die Zeichnung näher erläutert. Es zeigen rein schematisch:
- Fig.1:: eine dreidimensionale Ansicht mit Teilschnitt eines Getriebes mit einer erfindungsgemäßen Kupplung;
- Fig. 2:: eine dreidimensionale Ansicht eines Schaltnockens für eine erfindungsgemäße Kupplung;
- Fig. 3:: eine weitere dreidimensionale Ansicht des in Figur 2 gezeigten Schaltnockens;
- Fig. 4: :eine Seitenansicht des in Figur 2 gezeigten Schaltnockens;
- Fig. 5:: einen Schnitt durch den in Figur 2 gezeigten Schaltnocken;

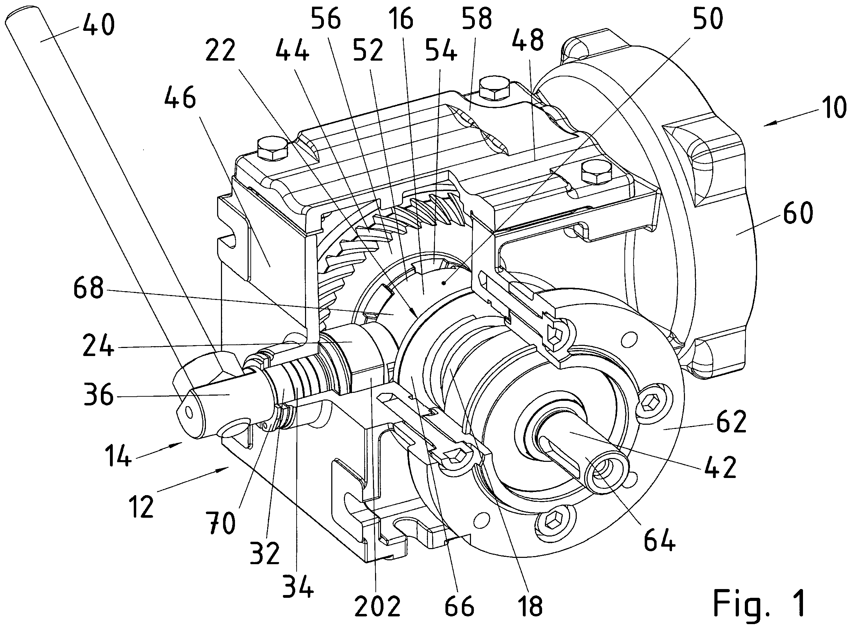

In der Figur 1 ist eine erfindungsgemäße Kupplung 12 in einem Getriebe 10 gezeigt. Das Getriebe 10 umfasst ein Gehäuse 48, welches einen Innenraum 50 umschließt. Das Gehäuse 48 weist einen Deckel 58, einen Eintriebsflansch 60 und einen Abtriebsflansch 62 auf. Am Eintriebsflansch 60 ist zum Beispiel ein nicht gezeigter Elektromotor anflanschbar. Am Abtriebsflansch 62 ist beispielsweise eine nicht gezeigte Treibrad-Einheit für eine Elektrohängebahn anbringbar.

Das Getriebe 10 umfasst weiter ein Ritzel welches mit einem Zahnrad 44 des Getriebes 10 kämmt. Das Ritzel und das Zahnrad 44 sind im Gehäuse 48 angeordnet. Die Welle 42 ist insbesondere als Abtriebswelle ausgeführt. Einen Wellenstumpf 64 der Abtriebswelle ragt durch den Abtriebsflansch 62 aus dem Gehäuse 48 heraus.

Das Zahnrad 44 ist drehbar auf der Welle 42 des Getriebes 10 angeordnet. Um zwischen einem drehfesten Zustand und einem gegeneinander drehbaren Zustand der Welle 42 relativ zum Zahnrad 44 zu schalten, weist das Getriebe 10 die Kupplung 12 auf.

Dazu weist die Kupplung 12 einen Schaltnocken 14, ein Schaltelement 16 und ein Federelement 18 auf.

Das Schaltelement 16 ist drehfest, aber axial verschiebbar auf der Welle 42 angeordnet. Das Schaltelement 16 ist vorzugsweise als Rohrabschnitt 68 ausgeführt, welches die Welle 42 umgibt. Zur drehfesten Verbindung mit der Welle 42 weist der Rohrabschnitt 68 zum Beispiel eine Innenverzahnung auf, welche in eine Verzahnung auf der Welle 42 eingreift, so dass dadurch das Schaltelement 16 auf der Welle 42 axial verschiebbar ist. Die Innenverzahnung und die Verzahnung sind so ausgeführt, dass diese in jeder möglichen axialen Stellung des Schaltelementes 16 zumindest teilweise in Eingriff bleiben. Dazu verlaufen die Zahnkämme der Verzahnung und der Innenverzahnung in axialer Richtung.

An seinem zum Abtriebsflansch 62 hingerichteten Endstück weist der Rohrabschnitt 68 einen flanschartigen Kragen 66 auf, welcher einstückig mit dem Rohrabschnitt 68 ausgeführt ist. Der Flanschartige Kragen bildet eine zum Zahnrad 44 hingerichtete Fläche 22 und steht vorzugsweise senkrecht zur Achse der Welle 42. Die Fläche 22 weist bei dem in Figur 1 gezeigten Ausführungsbeispiel die Form eines Rings auf.

Die zum Zahnrad 44 gerichtete Stirnseite des Rohrabschnitts 68 weist Klauen 52 auf. An der zum Schaltelement 16 gerichteten Stirnfläche 56 des Zahnrads 44 sind korrespondierende Klauen 54 ausgeformt. Durch axiales hin- und herschieben des Schaltelementes 16 schaltet die Kupplung 12 zwischen einer eingekuppelten Schaltposition, bei welcher die Klauen 52 in die korrespondierenden Klauen 54 eingreifen und einer ausgekuppelten Position , bei welcher die Klauen 52 und die korrespondierenden Klauen 54 voneinander beabstandet sind. Somit ist das Schaltelement 16 mit dem Zahnrad 44 des Getriebes 10, vorzugsweise formschlüssig, drehfest verbindbar und wieder lösbar ist.

Der Schaltnocken 14 weist vorteilhafterweise eine zylindrische Grundform auf. Die Bewegung des Schaltelementes 16 in axialer Richtung wird durch Drehen des Schaltnockens 14 um eine Drehachse 26 des Schaltnockens 14 bewirkt. Dazu ist der Schaltnocken 14 mit einem Durchführungsbereich 32 drehbar in einer Gehäusewand 46 des Gehäuses 48 gehalten.

Der Durchführungsbereich 32 weist insbesondere eine Nut 34 auf, welche radial umläuft und in welcher ein Abdichtungselement, wie zum Beispiel ein O-Ring, gehalten ist. Dadurch ist die Durchführung in der Gehäusewand 46, in welcher der Durchführungsbereich 32 gehalten ist abgedichtet. Bei der in Figur 1 gezeigten Ausführungsform ist die Durchführung durch eine zylindrische Ausstülpung der Gehäusewand 46 nach außen verlängert ausgeführt. Dadurch ist der Schaltnocken 14 sicherer in der Gehäusewand 46 gehalten.

In axialer Richtung der Drehachse 26 ist der Schaltnocken 14 in der Gehäusewand 46 fixiert. Dies ist zum Beispiel bei der in Figur 1 gezeigten Ausführungsform dadurch realisiert, dass der Endbereich 24 dicker ausgeführt ist als der Durchführungsbereich 32, insbesondere dicker als die Durchführung. Außerhalb des Gehäuses 48 ist am Schaltnocken 14 ein Sicherungselement, vorzugsweise ein Sicherungsring 70, angeordnet. Es sind aber auch andere Sicherungselemente, wie beispielsweise Splinte, Sicherungsscheiben oder Keile denkbar.

Das Federelement 18 drückt mit einer Federkraft auf das Schaltelement 16 in Richtung zum Zahnrad 44, also hin zur eingekuppelten Schaltposition. Dazu ist das Federelement 18 vorzugsweise als Spiraldruckfeder zwischen dem Schaltelement 16 und einem Abtriebslager, welches die Welle 42 drehbar im Gehäuse 48 lagert, angeordnet. Die Spiraldruckfeder umschließt die Welle 42 und stützt sich vorteilhafterweise auf einem Außenring des Abtriebslagers ab.

Der Schaltnocken 14 weist zwei Schaltflächen 20 auf. Die Schaltflächen 20 wirken derart mit dem Schaltelement 16 zusammen, dass die auf das Schaltelement 16 wirkende Federkraft in Abhängigkeit vom Drehwinkel des Drehens des Schaltnockens 14 in jeder Schaltposition ein lokales Minimum annimmt.

Dazu sind zum Beispiel die beiden Schaltflächen 20 an dem Endbereich 24 des Schaltnockens 14 ausgeformt. Der Endbereich 24 schließt sich an den Durchführungsbereich 32 an und liegt innerhalb des Gehäuses 48. Zur Ausbildung der Schaltflächen 20 sind in einem Abschnitt 28 des ansonsten zylinderförmigen Endbereichs 24 zwei Scheibensegmente 30 ausgenommen. Diese scheibensegmentartigen Ausnehmungen schließen sich direkt an die Stirnseite des Schaltnockens 14 an. Die Scheibensegmente 30 weisen unterschiedliche Segmenthöhen auf und sind so angeordnet, dass die, vorteilhafterweise abgefaste, Stirnkante 72 des Endbereiches 24 zwischen den Scheibensegmenten 30 an jeweils mindestens einer Stelle dem eigentlichen Kreisumfang des zylinderförmigen Endbereiches 24 entspricht.

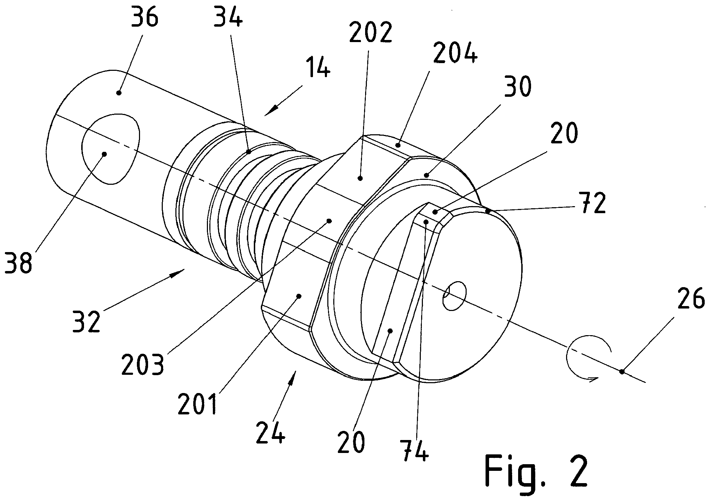

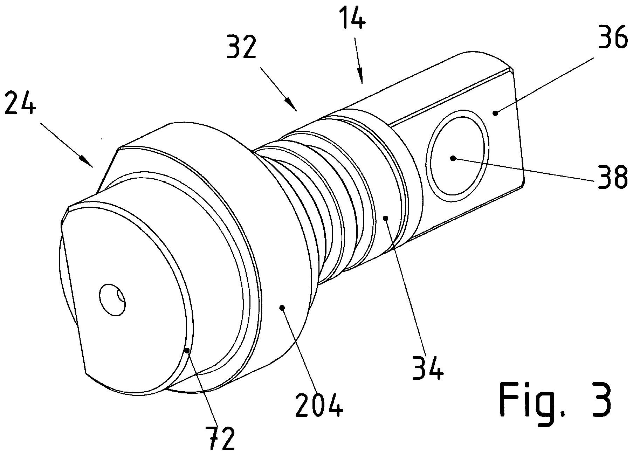

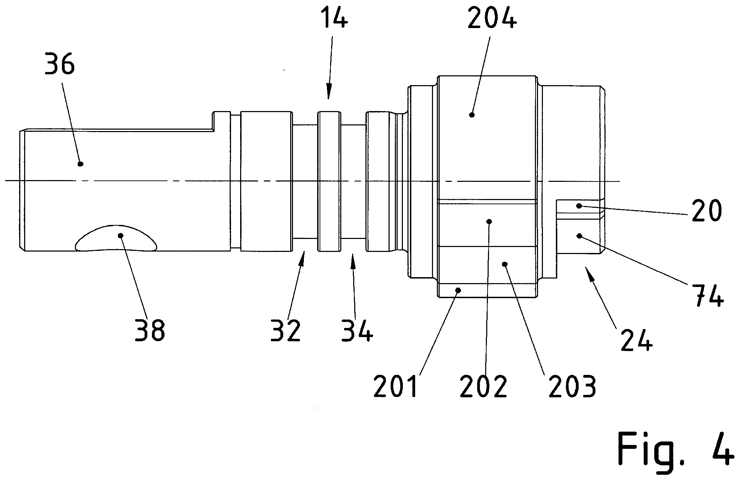

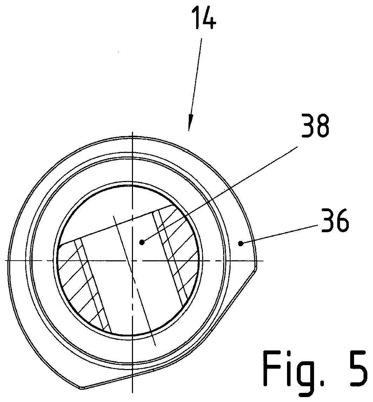

Bei der in den Figuren 2 bis 5 gezeigten Ausführungsform des Schaltnockens 14 liegen die Schaltflächen 20 als Ebenen parallel zur Drehachse 26. Die Schaltflächen 20 bilden einen rechten Winkel zueinander. Die Stoßkante 74, an welcher die zwei Schaltflächen 20 aneinander stoßen, ist vorteilhafterweise abgerundet ausgeführt.

Der Schaltnocken 14 ragt so weit in das Gehäuse 48 hinein und ist relativ zum Schaltelement 16 derart angeordnet, dass sich ein Umfangsflächenabschnitt des Endbereiches 24, welcher die Schaltflächen 20 umfasst, mit einem Teilbereich der Fläche 22 überlappt. Vorzugsweise steht die Drehachse 26 senkrecht zur Achse der Welle 42, beziehungsweise zur Bewegungsrichtung des Schaltelementes 16.

Im eingekuppelten Zustand liegt die Schaltfläche der zwei Schaltflächen 20, welche durch das Scheibensegment der zwei Scheibensegmente 30 mit der größeren Segmenthöhe gebildet ist, der Fläche 22 des Schaltelementes 18 im Wesentlichen planparallel gegenüber. Zwischen dieser Schaltfläche und der Fläche 22 ist insbesondere in der eingekuppelten Schaltposition Spiel vorhanden, so dass zum einen die Fläche 22 nur bei leichter Verdrehung des Schaltnockens 14 unerheblich am Schaltnocken 14 reibt und zum anderen die Federkraft voll über das Schaltelement 16 auf das Zahnrad 44 geleitet ist. Dazu greifen die Klauen 52 und die korrespondierenden Klauen 54 sicher ineinander.

Das Klauenprofil der Klauen 52 und der korrespondierenden Klauen 54 sind so ausgeführt, dass sie selbsthemmend gegen eine Verdrehung wirken. Andererseits können bei anderen Ausführungsbeispielen das Klauenprofil und die Federkraft so gewählt werde, dass ab einem bestimmten übertragenen Drehmoment die Kupplung 12 durchrutscht.

Beim Drehen des Schaltnockens 14 tritt nun zwangsläufig ein Teilabschnitt des Umfangsflächenabschnitts in Kontakt mit der Fläche 22 und der Schaltnocken 14 drückt das Schaltelemente 16 beim Weiterdrehen aus der eingekuppelten Schaltposition gegen die Federkraft in eine Position in welcher die Klauen 52 und die korrespondierenden Klauen 54 nicht mehr in Eingriff stehen. Somit besteht keine drehfeste Verbindung zwischen dem Zahnrad 44 und der Welle 42 mehr. Beim Weiterdrehen wird eine Position des Schaltelementes 16 erreicht, in welcher die Federkraft in Bezug auf die Bewegung des Schaltelementes 16 maximal ist.

Nach dieser Position mit maximaler Kraft drückt die Feder das Schaltelement 16 wieder in Richtung des Zahnrades 44, bis die Fläche 22 gegen die andere der zwei Schaltflächen 20 drückt. Nun hat das Schaltelement 16 die ausgekuppelte Schaltposition erreicht. Die Federkraft wird über das Schaltelement 16 und den Schaltnocken 14 vom Gehäuse 48 aufgenommen. Wird nun die Welle 42 gedreht, so reibt die Fläche 22 auf derjenigen Schaltfläche der zwei Schaltflächen 20, welche durch das Scheibensegment der Scheibensegmente 30 mit der geringeren Segmenthöhe gebildet ist.

Somit ist das Schaltelement 16 durch Drehen des Schaltnockens 14 um die Drehachse 26 des Schaltnockens 14 zwischen mindestens zwei Schaltpositionen gegen oder mit der auf das Schaltelement 16 wirkenden Federkraft des Federelementes 18 hin und her bewegbar.

Ausgehend von der eingekuppelten Schaltposition entsteht bei einer vollständigen Umdrehung des Schaltnockens 14 folgender Kraftverlauf. Zuerst ist die Spiraldruckfeder innerhalb der zugelassenen Bewegung am weitesten ausgelenkt und somit die Federkraft minimal. Beim Drehen des Schaltnockens 14 wird das Schaltelement 16 vom Zahnrad 44 weggedrückt und die Schraubendruckfeder gestaucht.

Die Federkraft steigt bis der mit der Fläche 22 in Kontakt stehende Bereich des Umfangsflächenabschnitts einer ersten maximalen radialen Erstreckung des Schaltnockens 14 beziehungsweise des Umfangsflächenabschnitts entspricht.

Danach nimmt die Federkraft wieder ab bis die Fläche 22 gegen die Schaltfläche, welcher der ausgekuppelten Schaltposition entspricht, gedrückt wird. Beim Weiterdrehen drückt der Schaltnocken 14 das Schaltelement 16 wieder weg vom Zahnrad 44. Dadurch nimmt die Federkraft wieder zu bis eine zweite maximale radiale Erstreckung des Schaltnockens 14 beziehungsweise des Umfangsflächenabschnitts erreicht wird. Bei einem Zylinderförmigen Endbereich 24 ist die erste maximale radiale Erstreckung insbesondere gleich der zweiten maximalen radialen Erstreckung. Durch diese Ausführungsart liegt die ausgekuppelte Schaltposition in Abhängigkeit des Drehwinkels in einem lokalen Minimum der Federkraft.

Die Kupplung 12 ist auf zwei verschiedene Arten schaltbar. Entweder durch vollständiges Drehen des Schaltnockens 14 um 360 Grad oder durch hin und her drehen zwischen den beiden durch die Schaltflächen 20 bestimmten Schaltpositionen bestimmten Drehpositionen des Schaltnockens 14 schaltbar. Letztere Möglichkeit unterteilt sich noch in die zwei möglichen Richtungen der Drehung.

Die lokalen Minima sind vorzugsweise echte lokale Minima, d.h. die Funktionswerte in der Umgebung der Minima sind größer und nicht gleich dem Wert der lokalen Minima.

Zur leichteren Betätigung des Schaltnockens 14 ist ein dem Endbereich 24 gegenüberliegende Endabschnitt 36 des Schaltnockens 14 eine Befestigungseinrichtung 38 für einen Schalthebel 40 ausgeformt. Vorzugsweise ist die Befestigungseinrichtung 38 als eine durchgehende Ausnehmung im Endabschnitt 36 ausgeführt. Die durchgehende Ausnehmung weist ein Innengewinde auf. In das Innengewinde ist ein passendes Außengewinde des Schalthebels 40 einschraubbar.

Vorzugsweise ist an dem Außengewinde des Schalthebels 40 eine Kontermutter vorgesehen, welche gegen einen abgeplatteten Bereich des im Wesentlichen zylinderförmigen Endabschnitts 36 drückt. Dadurch wird ein selbstständiges herausdrehen des Schalthebels 40 aus dem Innengewinde verhindert.

Um ein selbsttätiges Schalten der Kupplung 12 zu verhindern, ist der Schalthebel 40 derart ausgeführt, dass eine Kraftkomponente der Gewichtskraft des Schalthebels 40, welche über den Schaltnocken 14 auf das Schaltelement 16 wirkt, kleiner als die Federkraft ist. Insbesondere ist diese Bedingung bei jeder Lage beziehungsweise Einbaulage des Getriebes 10 erfüllt. Dies hat den weiteren Vorteil, dass ein Anschlag für den Schalthebel 40 unnötig ist. Die Kupplung 12 lässt sich auch durch ein vollständiges umdrehen des Schalthebels 40 betätigen.

Vorteilhafterweise ist das Getriebe 10 bei einer Laufkatze für eine Elektrohängebahn eingesetzt. Das Getriebe 10 ist dafür mit einem Motor der Laufkatze verbunden. Die Abtriebswelle des Getriebes 10 wird von dem Motor angetrieben. Ein Laufrad der Laufkatze ist mit der Abtriebswelle des Getriebes 10 drehfest verbunden. Bei einem Störfall ist es wichtig, dass die Förderelemente der Elektrohängebahn frei beweglich sind. Dazu lässt sich per Hand die drehfeste Verbindung der Abtriebswelle und dem Motor mit der Kupplung 12 trennen. So wird verhindert, dass sich das Förderelement von alleine bewegt, aber trotzdem gezielt bewegbar ist. Somit ist die Sicherheit der Elektrohängebahn erhöht.

**Wie in** **Figur 2** **gezeigt, weist der Schaltnocken 14 eine ringförmige Aufdickung 204, insbesondere also Scheibensegment 30, auf, die einen Außendurchmesser d aufweist.**

**In diese als zylindrischer Ring ausgeführte Urform sind zueinander nicht parallele Anschlagflächen 201 und 202 eingearbeitet, die mittels einer Stoßkante 203 voneinander beabstandet sind. Die Stoßkante 203 ist beispielsweise mit einem Radius ausführbar, der kleiner ist als d/2. Der Radialabstand, also Abstand zur Achse des Schaltnockens 14, der Anschlagflächen 201 und 202 sowie der Stoßkante 203 ist kleiner als d/2.**

**Die Anschlagflächen 201 und 202 des Schaltnocken 14 wirken zusammen mit der Innenfläche, also mit einem eben ausgeführten Innenflächenabschnitt, der Gehäusewand 46, welche zur Begrenzung der Drehbewegung der Schaltnocke 14 eine Fläche aufweist, die einen geringeren Radialabstand aufweist als d/2, insbesondere aber einen ungefähr gleich großen oder etwas kleineren Radialabstand wie die Stoßkante 203. Somit sind mit dem Schalthebel 40 zwei Drehstellungen stabil einstellbar, nämlich eine erste Drehstellung, bei welcher die Anschlagfläche 201 an der Innenfläche der Gehäusewand 46, anliegt und eine zweite Drehstellung, bei welcher die Anschlagfläche 202 an der Innenfläche der Gehäusewand 46, anliegt.**

**Vorzugsweise sind die Radialabstände der Anschlagflächen 201 und 202 zur Achse des Schaltnockens gleich groß.**

**Die Radialabstände der Schaltflächen 20 sind kleiner als die Radialabstände der Anschlagflächen 201 und 202.**

**Der Radialabstand der beiden Schaltflächen 20 ist unterschiedlich. Somit ist der fürs Schalten notwendige axiale Hub erzeugbar.**

**Die Schaltflächen 20 weisen zueinander einen Winkel auf, der demjenigen Winkel gleicht, welchen die anschlagflächen 201 und 202 zueinander aufweisen.**

**Die erste Schaltfläche 20 ist parallel zur Anschlagfläche 201 angeordnet. Die zweite Schaltfläche 20 ist parallel zur Anschlagfläche 202 angeordnet.**

### Bezugszeichenliste

- 10: Getriebe
- 12: Kupplung
- 14: Schaltnocken
- 16: Schaltelement
- 18: Federelement
- 20: Schaltflächen
- 22: Fläche
- 24: Endbereich
- 26: Drehachse
- 28: Abschnitt
- 30: Scheibensegment
- 32: Durchführungsbereich
- 34: Nut
- 36: Endabschnitt
- 38: Befestigungseinrichtung
- 40: Schalthebel
- 42: Welle
- 44: Zahnrad
- 46: Gehäusewand
- 48: Gehäuse
- 50: Innenraum
- 52: Klauen
- 54: korrespondierende Klauen
- 56: Stirnfläche
- 58: Deckel
- 60: Eintriebsflansch
- 62: Abtriebsflansch
- 64: Wellenstumpf
- 66: flanschartiger Kragen
- 68: Rohrabschnitt
- 70: Sicherungsring
- 72: Stirnkante
- 74: Stoßkante
- 201: erste Anschlagfläche
- 202: zweite Anschlagfläche
- 203: Stoßkante
- 204: ringförmiger Aufdickung

## Patentansprüche

1. Kupplung (12) für ein Getriebe (10),
wobei die Kupplung (12) einen Schaltnocken (14), ein Schaltelement (16) und ein Federelement (18) aufweist,
wobei das Schaltelement (16) durch Drehen des Schaltnockens (14) um die Drehachse (26) des Schaltnockens (14) zwischen mindestens zwei Schaltpositionen gegen oder mit einer auf das Schaltelement (16) wirkenden Federkraft des Federelementes hin und her bewegbar ist, wobei der Schaltnocken (14) zwei Schaltflächen (20) aufweist, und
die Schaltflächen (20) mit dem Schaltelement (16) derart zusammenwirken, dass die auf das Schaltelement (16) wirkende Federkraft in Abhängigkeit vom Drehwinkel des Drehens in jeder Schaltposition ein lokales Minimum annimmt, **dadurch gekennzeichnet, dass**
**der Schaltnocken (14) zwei Anschlagflächen aufweist, die mit einer Innenfläche, insbesondere mit einem Innenflächenabschnitt, eines Gehäuseteils derart zusammenwirken, dass die Drehbewegung des Schaltnockens (14) begrenzt ist,** wobei
- **die Schaltflächen (20) zueinander einen Winkel aufweisen, der demjenigen Winkel gleicht, welchen die beiden Anschlagflächen (201) und (202) zueinander aufweisen,**
**oder dass**
- **die erste Schaltfläche (20) parallel zur Anschlagfläche (201) angeordnet ist und die zweite Schaltfläche (20) parallel zur Anschlagfläche (202) angeordnet ist.**

2. Kupplung (12) nach Anspruch 1,
**dadurch gekennzeichnet, dass**
der Schaltnocken (14) mit dem Schaltelement (16) derart zusammenwirkt, dass beim Drehen des Schaltnockens (14) auf das Schaltelement (16) zwischen den mindestens zwei Schaltpositionen bei mindestens einer Drehposition des Schaltnockens (14) eine maximale Federkraft wirkt.

3. Kupplung (12) nach Anspruch 1 oder 2,
**dadurch gekennzeichnet, dass**
die zwei Schaltflächen (20) zu einer Fläche des Schaltelements (16) korrespondieren, wobei in einem der mindestens zwei Schaltzustände die entsprechende Schaltfläche gegen die Fläche drückt.

4. Kupplung (12) nach Anspruch 1, 2 oder 3,
**dadurch gekennzeichnet, dass**
in einem zweiten der mindestens zwei Schaltzustände die zugehörige Schaltfläche parallel bis annähernd parallel von der Fläche beabstandet ist,
oder
die zwei Schaltflächen (20) an einem Endbereich (24) des Schaltnockens (14) angeordnet sind.

5. Kupplung (12) nach einem der vorrangegangenen Ansprüche,
**dadurch gekennzeichnet, dass**
der Schaltnocken (14) im Wesentlichen zylinderförmig ist,
oder
die Schaltflächen (20) eben sind und parallel zur Drehachse (26) angeordnet sind,
**oder dass**
die Schaltflächen (20) zueinander in einem Winkel angeordnet sind, vorzugsweise im Wesentlichen senkrecht zueinander angeordnet sind,
oder dass der Endbereich (24) einen Abschnitt (28) aufweist, aus welchem zwei Scheibensegmente (30) zur Bildung der Schaltflächen (20) an einem freien Ende des Endbereiches (24) ausgenommen sind,
**oder dass**
sich an den Endbereich (24) ein Durchführungsbereich (32) des Schaltnockens (14) anschließt, welcher eine zur Drehachse (26) radial umlaufende Nut (34) zur Aufnahme eines Dichtungselementes, insbesondere eines O-Ringes, aufweist,
oder
der dem Endbereich (24) gegenüberliegende Endabschnitt (36) das Schaltnockens (14) eine Befestigungseinrichtung (38) für einen Betätigungshebel aufweist.

6. Kupplung (12) nach einem der vorrangegangenen Ansprüche,
**dadurch gekennzeichnet, dass**
das Schaltelement (16) durch das Drehen des Schaltnockens (14) in einer Richtung senkrecht zur Drehachse (26) des Schaltnockens (14) zwischen einer Einkuppelposition und einer Auskuppelpostion hin und her bewegbar ist,
**oder dass**
das Schaltelement (16) drehfest und axial verschiebbar mit einer Welle (42) des Getriebes (10) verbindbar ist,
**oder dass**
das Schaltelement (16) mit einem Zahnrad (44) des Getriebes (10), vorzugsweise formschlüssig, drehfest verbindbar und wieder lösbar ist.

7. **Kupplung (12) nach einem der vorrangegangenen Ansprüche,**
**dadurch gekennzeichnet, dass**
**die Anschlagflächen in einem Scheibensegment (30) angeordnet sind, dessen größter Außenradius größer** ist als **der Radialabstand von der Innenfläche des Gehäuseteils zur Achse des Schaltnockens (14).**

8. **Kupplung (12) nach einem der vorrangegangenen Ansprüche,**
**dadurch gekennzeichnet, dass**
**der Radialabstand der Anschlagflächen zur Achse des Schaltnockens (14) kleiner ist als der Abstand zwischen Innenfläche des Gehäuseteils und Achse des Schaltnockens (14),**
**insbesondere wobei die Innenfläche parallel zur Achse des Schaltnockens (14) verläuft.**

9. **Kupplung (12) nach einem der vorrangegangenen Ansprüche,**
**dadurch gekennzeichnet, dass**
**die Radialabstände der Anschlagflächen (201) und (202) zur Achse des Schaltnockens (14) gleich sind,**
**oder dass**
**die Radialabstände der Schaltflächen (20) kleiner sind als die Radialabstände der Anschlagflächen (201) und 202,**
**oder dass**
**der Radialabstand der beiden Schaltflächen (20) unterschiedlich ist.**

10. Getriebe (10) mit einer Kupplung (12) nach einem der Ansprüche 1 bis 9, **dadurch gekennzeichnet, dass**
der Schaltnocken (14), insbesondere mit seinem Durchführungsabschnitt, in einer Gehäusewand (46) eines Gehäuses (48) des Getriebes (10) gehalten ist,
wobei die Schaltflächen (20) und das Schaltelement (16) in einem Innenraum des Gehäuses (48) angeordnet sind.

11. Getriebe (10) nach Anspruch 10, **dadurch gekennzeichnet, dass**
das Schaltelement (16) auf einer Welle (42), insbesondere Abtriebswelle, des Getriebes (10) drehfest und axial verschiebbar angeordnet ist,
wobei die Federkraft das Schaltelement (16) in Richtung eines Zahnrades (44), welches drehbar auf der Welle (42) angeordnet ist, drückt, wobei das Schaltelement (16) im eingekuppelten Zustand drehfest mit dem Zahnrad (44) verbunden ist, insbesondere Klauen (52) des Mitnehmers und dazu korrespondierende Klauen (52) in einer Stirnfläche (56) (56) des Zahnrades (44) gegenseitig ineinandergreifen.

12. Getriebe (10) nach Anspruch 10 oder 11, **dadurch gekennzeichnet, dass**
am Schaltnocken (14) außerhalb der Getriebegehäuses ein Schalthebel (40) angeordnet ist, mit welchem der Schaltnocken (14) gedreht wird, insbesondere wobei ein Kraftkomponente vom Schaltnocken (14) auf das Schaltelement (16), welche durch die Gewichtskraft des Schalthebels (40) hervorgerufen ist, in jeder Lage des Getriebes (10) kleiner ist als die Federkraft auf das Schaltelement (16).

13. Laufkatze für eine Elektrohängebahn mit einem Getriebe (10) nach einem der Ansprüche 10 bis 12, wobei das Getriebe (10) von einem Motor der Laufkatze angetrieben ist und ein Laufrad der Laufkatze mit der Welle (42) des Getriebes (10) drehfest verbunden ist.

14. Elektrohängebahn mit einer Laufkatze nach Anspruch 13.

## Claims

1. A coupling (12) for a gear mechanism (10),
wherein the coupling (12) has a switching cam (14), a switching element (16) and a spring element (18),
wherein the switching element (16) can be moved back and forth between at least two switching positions counter to or with a spring force of the spring element which acts on the switching element (16) by turning the switching cam (14) about the axis of rotation (26) of the switching cam (14),
wherein the switching cam (14) has two switching faces (20), and
the switching faces (20) cooperate with the switching element (16) such that the spring force which acts on the switching element (16) assumes a local minimum in each switching position dependent on the angle of rotation of the turning,
**characterised in that**
the switching cam (14) has two stop faces which cooperate with an inner face, in particular with an inner face portion, of a housing part such that the rotary movement of the switching cam (14) is limited,
wherein
- the switching faces (20) are at an angle relative to each other which is equal to the angle of the two stop faces (201) and (202) relative to each other,
or **in that**
- the first switching face (20) is arranged parallel to the stop face (201) and the second switching face (20) is arranged parallel to the stop face (202).

2. A coupling (12) according to Claim 1,
**characterised in that**
the switching cam (14) cooperates with the switching element (16) such that upon turning the switching cam (14) a maximum spring force acts on the switching element (16) between the at least two switching positions at at least one rotary position of the switching cam (14).

3. A coupling (12) according to Claim 1 or 2,
**characterised in that**
the two switching faces (20) correspond to a face of the switching element (16), with the corresponding switching face pressing against the face in one of the at least two switching states.

4. A coupling (12) according to Claim 1, 2 or 3,
**characterised in that**
in a second one of the at least two switching states the associated switching face is spaced apart parallel to approximately parallel from the face,
or
the two switching faces (20) are arranged on an end region (24) of the switching cam (14).

5. A coupling (12) according to one of the preceding claims,
**characterised in that**
the switching cam (14) is substantially cylindrical,
or
the switching faces (20) are flat and are arranged parallel to the axis of rotation (26),
or **in that**
the switching faces (20) are arranged at an angle to each other, preferably are arranged substantially perpendicularly to each other,
or **in that** the end region (24) has a portion (28) out of which two disc segments (30) are taken to form the switching faces (20) at one free end of the end region (24),
or **in that**
a lead-through region (32) of the switching cam (14) adjoins the end region (24), which lead-through region has a groove (34) radially circumambient to the axis of rotation (26) for receiving a seal element, in particular an O-ring,
or
the end portion (36) of the switching cam (14) lying opposite the end region (24) has a fastening means (38) for an actuating lever.

6. A coupling (12) according to one of the preceding claims,
**characterised in that**
the switching element (16) can be moved back and forth between an engagement position and a disengagement position by the turning of the switching cam (14) in a direction perpendicular to the axis of rotation (26) of the switching cam (14),
or **in that**
the switching element (16) can be connected non-rotatably and axially displaceably to a shaft (42) of the gear mechanism (10),
or **in that**
the switching element (16) can be connected, preferably in positive manner, non-rotatably to and released again from a gear wheel (44) of the gear mechanism (10).

7. A coupling (12) according to one of the preceding claims,
**characterised in that**
the stop faces are arranged in a disc segment (30), the maximum external radius of which is greater than the radial distance from the inner face of the housing part to the axis of the switching cam (14).

8. A coupling (12) according to one of the preceding claims,
**characterised in that**
the radial distance of the stop faces to the axis of the switching cam (14) is smaller than the distance between the inner face of the housing part and the axis of the switching cam (14),
in particular with the inner face running parallel to the axis of the switching cam (14).

9. A coupling (12) according to one of the preceding claims,
**characterised in that**
the radial distances of the stop faces (201) and (202) to the axis of the switching cam (14) are identical,
or **in that**
the radial distances of the switching faces (20) are smaller than the radial distances of the stop faces (201) and (202),
or **in that**
the radial distance of the two switching faces (20) is different.

10. A gear mechanism (10) with a coupling (12) according to one of Claims 1 to 9, **characterised in that**
the switching cam (14), in particular with its lead-through portion, is held in a housing wall (46) of a housing (48) of the gear mechanism (10),
the switching faces (20) and the switching element (16) being arranged in an inner space of the housing (48).

11. A gear mechanism (10) according to Claim 10,
**characterised in that**
the switching element (16) is arranged non-rotatably and axially displaceably on a shaft (42), in particular output shaft, of the gear mechanism (10),
the spring force pressing the switching element (16) in the direction of a gear wheel (44) which is arranged rotatably on the shaft (42), the switching element (16) in the engaged state being connected non-rotatably to the gear wheel (44), in particular claws (52) of the entraining means and corresponding claws (52) mutually intermeshing in an end face (56) (56) [sic] of the gear wheel (44).

12. A gear mechanism (10) according to Claim 10 or 11,
**characterised in that**
there is arranged on the switching cam (14) outside the gear mechanism housing a switching lever (40) with which the switching cam (14) is turned, in particular with a force component from the switching cam (14) onto the switching element (16), which is caused by the weight of the switching lever (40), in each position of the gear mechanism (10) being smaller than the spring force on the switching element (16).

13. A trolley for a telpher having a gear mechanism (10) according to one of Claims 10 to 12,
wherein the gear mechanism (10) is driven by a motor of the trolley and a running wheel of the trolley is connected non-rotatably to the shaft (42) of the gear mechanism (10).

14. A telpher having a trolley according to Claim 13.

## Revendications

1. Accouplement (12) pour un mécanisme de transmission (10),
l'accouplement (12) comprenant une came de commutation (14), un élément de commutation (16) et un élément ressort (18),
dans lequel l'élément de commutation (16) peut aller et venir entre au moins deux positions de commutation contre ou avec une force de ressort de l'élément ressort agissant sur l'élément de commutation (16) par rotation de la came de commutation (14) autour de l'axe de rotation (26) de la came de commutation (14),
dans lequel la came de commutation (14) présente deux surfaces de commutation (20), et
les surfaces de commutation (20) coopèrent avec l'élément de commutation (16) de telle sorte que la force de ressort agissant sur l'élément de commutation (16) adopte un minimum local dans chaque position de commutation en fonction de l'angle de rotation de la rotation,
**caractérisé en ce que**
la came de commutation (14) présente deux surfaces de butée qui coopèrent avec une surface intérieure, en particulier avec une section de surface intérieure, d'une partie de carter de telle sorte que le mouvement de rotation de la came de commutation (14) est limité,
dans lequel
- les surfaces de commutation (20) présentent entre elles un angle qui est le même que l'angle que présentent entre elles les deux surfaces de butée (201) et (202),
ou que
- la première surface de commutation (20) est disposée parallèlement à la surface de butée (201) et la deuxième surface de commutation (20) est disposée parallèlement à la surface de butée (202).

2. Accouplement (12) selon la revendication 1,
**caractérisé en ce que**
la came de commutation (14) coopère avec l'élément de commutation (16) de telle sorte que, lors de la rotation de la came de commutation (14), une force de ressort maximale agit sur l'élément de commutation (16) entre lesdites au moins deux positions de commutation dans au moins une position de rotation de la came de commutation (14).

3. Accouplement (12) selon la revendication 1 ou 2,
**caractérisé en ce que**
les deux surfaces de commutation (20) correspondent à une surface de l'élément de commutation (16), la surface de commutation correspondante exerçant une pression contre la surface dans l'un desdits au moins deux états de commutation.

4. Accouplement (12) selon la revendication 1, 2 ou 3,
**caractérisé en ce que**
dans un deuxième desdits au moins deux états de commutation, la surface de commutation associée est espacée parallèlement à approximativement parallèlement de la surface,
ou
les deux surfaces de commutation (20) sont disposées dans une zone d'extrémité (24) de la came de commutation (14).

5. Accouplement (12) selon l'une des revendications précédentes,
**caractérisé en ce que**
la came de commutation (14) est sensiblement cylindrique,
ou
les surfaces de commutation (20) sont planes et disposés parallèlement à l'axe de rotation (26),
ou que
les surfaces de commutation (20) sont disposés selon un angle l'une par rapport à l'autre, de préférence sensiblement perpendiculairement l'une à l'autre,
ou que la zone d'extrémité (24) présente une section (28) dont sont enlevés deux segments de disque (30) pour former les surfaces de commutation (20) à une extrémité libre de la zone d'extrémité (24),
ou que
une zone de passage (32) de la came de commutation (14) se raccorde à la zone d'extrémité (24), laquelle présente une rainure (34) périphérique radiale par rapport à l'axe de rotation (26) pour recevoir un élément d'étanchéité, en particulier un joint torique,
ou
la section d'extrémité (36) de la came de commutation (14) opposée à la zone d'extrémité (24) présente un moyen de fixation (38) pour un levier d'actionnement.

6. Accouplement (12) selon l'une des revendications précédentes,
**caractérisé en ce que**
l'élément de commutation (16) peut aller et venir entre une position d'accouplement et une position de désaccouplement dans une direction perpendiculaire à l'axe de rotation (26) de la came de commutation (14) par rotation de la came de commutation (14),
ou que
l'élément de commutation (16) peut être relié de manière solidaire en rotation et déplaçable axialement à un arbre (42) du mécanisme de transmission (10),
ou que
l'élément de commutation (16) peut être relié de manière solidaire en rotation, de préférence par complémentarité de forme, à une roue dentée (44) du mécanisme de transmission (10) et en être à nouveau détaché.

7. Accouplement (12) selon l'une des revendications précédentes,
**caractérisé en ce que**
les surfaces de butée sont disposées dans un segment de disque (30) dont le plus grand rayon extérieur est supérieur à la distance radiale entre la surface intérieure de la partie de carter et l'axe de la came de commutation (14).

8. Accouplement (12) selon l'une des revendications précédentes,
**caractérisé en ce que**
la distance radiale des surfaces de butée par rapport à l'axe de la came de commutation (14) est inférieure à la distance entre la surface intérieure de la partie de carter et l'axe de la came de commutation (14),
en particulier la surface intérieure s'étendant parallèlement à l'axe de la came de commutation (14).

9. Accouplement (12) selon l'une des revendications précédentes,
**caractérisé en ce que**
les distances radiales des surfaces de butée (201) et (202) par rapport à l'axe de la came de commutation (14) sont égales,
ou que
les distances radiales des surfaces de commutation (20) sont plus petites que les distances radiales des surfaces de butée (201) et 202,
ou que
la distance radiale des deux surfaces de commutation (20) est différente.

10. Mécanisme de transmission (10) comportant un accouplement (12) selon l'une des revendications 1 à 9,
**caractérisé en ce que**
la came de commutation (14) est maintenue dans une paroi de carter (46) d'un carter (48) du mécanisme de transmission (10) en particulier par sa section de passage,
les surfaces de commutation (20) et l'élément de commutation (16) étant disposés à l'intérieur du carter (48).

11. Mécanisme de transmission (10) selon la revendication 10,
**caractérisé en ce que**
l'élément de commutation (16) est disposé de manière solidaire en rotation et déplaçable axialement sur un arbre (42), en particulier un arbre de sortie, du mécanisme de transmission (10),
la force de ressort pressant l'élément de commutation (16) dans la direction d'une roue dentée (44) qui est disposée de manière rotative sur l'arbre (42), l'élément de commutation (16) étant relié de manière solidaire en rotation à la roue dentée (44) dans l'état accouplé, en particulier des griffes (52) de l'élément d'entraînement et des griffes correspondantes (52) dans une face frontale (56) (56) de la roue dentée (44) s'engrenant mutuellement.

12. Mécanisme de transmission (10) selon la revendication 10 ou 11,
**caractérisé en ce que**
un levier de commutation (40) est disposé sur la came de commutation (14) à l'extérieur du carter de mécanisme de transmission, avec lequel la came de commutation (14) est tournée, en particulier dans lequel une composante de force de la came de commutation (14) sur l'élément de commutation (16), provoquée par la force due au poids du levier de commutation (40), est plus petite, dans toute position du mécanisme de transmission (10), que la force de ressort sur l'élément de commutation (16).

13. Chariot pour un convoyeur électrique suspendu équipé d'un mécanisme de transmission (10) selon l'une des revendications 10 à 12,
dans lequel le mécanisme de transmission (10) est entraîné par un moteur du chariot et une roue du chariot est reliée de manière solidaire en rotation à l'arbre (42) du mécanisme de transmission (10).

14. Convoyeur électrique suspendu équipé d'un chariot selon la revendication 13.
